# EUROPÄISCHE PATENTSCHRIFT

(11) **EP 2 205 876 B1**
(45) Veröffentlichungstag und Bekanntmachung des Hinweises auf die Patenterteilung: **02.05.2012**
(21) Anmeldenummer: 08841321.6
(22) Anmeldetag: 24.10.2008
(51) Int. Cl.: F16B 13/14

(54) **TELESKOPDÜBEL II UND SETZVERFAHREN**
TELESCOPIC DOWEL II AND SETTING METHOD
CHEVILLE TÉLESCOPIQUE II ET PROCÉDÉ DE POSE

(30) Priorität: 26.10.2007 DE 102007051628
(43) Veröffentlichungstag der Anmeldung: 14.07.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/001729
(87) Internationale Veröffentlichungsnummer: WO 2009/052802

(56) Entgegenhaltungen:
- DE-A1-102005 012 521
- GB-A- 2 095 355
- US-A- 4 100 954

## Beschreibung

Die Erfindung betrifft einen Klebedübel zur Verwendung in Leichtbauplatten, der aus mindestens einem Zylinderkörper und mindestens einem Kolbenkörper besteht, wobei der einzelne Zylinderkörper zusammen mit mindestens einem Kolbenkörper einen Verdrängungsbereich umschließt und wobei der einzelne Zylinderkörper und/oder der einzelne Kolbenkörper mindestens eine Austrittsausnehmung aufweist. Ein derartiger Klebedübel ist aus der US 4 100 954 A bekannt.

Die Leichtbauplatten, oft auch als Sandwichplatten oder Wabenplatten bezeichnet, haben im Möbelbau in der Regel formsteife Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge, z.B. durch Anschrauben, befestigt werden, hat man das Problem, dass die Befestigungsmittel in der Regel nur an der relativ dünnen oberen Decklage bzw. Deckplatte Halt finden.

Dazu wird in der nicht vorveröffentlichten DE 10 2006 049 953 A1 ein mindestens zweiteiliger Dübel beschrieben, bei dem mindestens zwei größere Dübelbauteile während der Dübelmontage ineinander geschoben werden. Ein zumindest bereichsweise topfförmiges Bauteil hat hierbei die Funktion eines Zylinders, während ein zapfenartiges Bauteil die Funktion eines Kolbens übernimmt. Im Boden des topfförmigen Bauteils liegt eine Klebstoffpatrone, deren ballonartige Hülle beim Zusammenschieben der beiden genannten Dübelbauteile aufplatzt. Der Klebstoff ergießt sich somit im Bereich der unteren Deckplatte der Leichtbauplatte.

Die eingangs genannte US 4 100 954 A beschreibt einen zylinderartigen, perforierten Dübel mit einer einschraubbaren Schraube, die vorn einen kolbenartigen Zapfen aufweist. Zwischen dem eintreibbaren Zapfen und dem zylinderartigen Dübel sind klebstoffhaltige Mikroperlen eingeschlossen.

Aus der DE 10 2005 012 521 A1 ist u.a. ein Blechbeschlag bekannt, der auf ein Holzwerkstoffelement aufgeklebt werden soll. Dazu ist die plane Fügefläche des Blechbeschlags mit einem Klebstoff beschichtet. Ein offenbartes Verfahren beschreibt, wie der Blechbeschlag unmittelbar vor der Beschlagsmontage mittels magnetischer Induktion erwärmt wird, um dann mit dem Holzwerkstoffelement verbunden zu werden.

Der vorliegenden Erfindung liegt das Problem zugrunde, einen Klebedübel für Leichtbauplatten zu entwickeln, der bei einfacher Montage fest, sicher und dauerhaft in der Leichtbauplatte hält.

Das Problem wird mit den Merkmalen des Anspruchs 1 gelöst. Der Verdrängungsbereich des Klebedübels ist mit einem thermisch schmelzbaren Klebstoff befüllt. Mindestens ein elektrisch leitfähiger und/oder ein ferromagnetischer Aufschmelzkörper umgibt den Klebstoff zumindest bereichsweise oder wird selbst vom Klebstoff zumindest bereichsweise umgeben.

In Anspruch 8 wird ein Dübelsetzverfahren beschrieben, bei dem der Klebedübel, in dem mindestens ein elektrisch leitfähiger und/oder ein ferromagnetischer Aufschmelzkörper den noch nicht fließfähigen Klebstoff zumindest bereichsweise umgibt oder von diesem Klebstoff zumindest bereichsweise umgeben wird, zum Aufschmelzen des Klebstoffs - unmittelbar vor dem Setzvorgang - durch ein hochfrequentes magnetisches Wechselfeld bewegt wird. Beim Einstecken des Klebedübels in eine den Klebedübel aufnehmende Leichtbauplattenausnehmung werden der Zylinderkörper und der Kolbenkörper - unter einem Verdrängen des nun fließfähigen Klebstoffs - zusammengeschoben. Dabei verklebt der aus dem Klebedübel verdrängte aushärtende Klebstoff den Zylinderkörper und den Kolbenkörper mit der Leichtbauplatte. Hierbei verklebt auch der Zylinderkörper mit dem Kolbenkörper.

Mit der Erfindung wird ein sog. hydraulischer Klebedübel mit mindestens einem integrierten fremderhitzbaren Klebstoffaufschmelzkörper vorgestellt, der im Prinzip wie eine Zylinder-Kolben-Einheit aufgebaut ist. Im Handelszustand ist der Zylinder in der Regel mit mindestens einem starren Klebstoffkörper und mindestens einem Aufheizkörper befüllt. Der Kolben und der Zylinder umschließen den oder die Klebstoffkörper.

Unmittelbar vor oder beim Setzen des Klebedübels wird dieser, einem hochfrequenten magnetischen Wechselfeld ausgesetzt, das im oder in den Aufschmelzkörpern starke Wirbelströme induziert, der oder die so aufgeheizt wiederum den in ihrer unmittelbaren Nähe befindenden festen Klebstoff kurzfristig aufschmelzen.

Wird nun die Zylinder-Kolben-Einheit mit dem aufgeschmolzenen Klebstoff in eine Bohrung einer Leichtbauplatte gesteckt und dort der Kolben in den Zylinder oder auch umgekehrt der Zylinder über den Kolben geschoben, strömt der Klebstoff unter Druck aus dem Zylinder aus. Hierbei kann der noch fließfähige Klebstoff über Bohrungen oder Kanäle dorthin geleitet werden, wo er zum Halten des Dübels in der Leichtbauplatte benötigt wird. Nach dem teleskopartigen Zusammenschieben der sog. Zylinder-Kolben-Einheit härtet der Klebstoff aus. Der Aufschmelzkörper verbleibt im Klebedübel.

In die z.B. aus zäh elastischem Kunststoff gefertigte Einheit kann dann, auch schon während des Aushärtens eine Schraube eingedreht werden.

Um zum Beispiel auch Plattendickenschwankungen ausgleichen zu können, benötigen diese Klebedübel keine Verrastung zwischen den beiden Hauptbauteilen. Wenn das Klebstoffreservoir des einzelnen Klebedübeltyps groß genug ist, kann dieser Typ auch für Leichtbauplatten unterschiedlicher Wandstärke eingesetzt werden. Bei dickeren Platten wird dann der Kolben einfach weniger weit in den Zylinder geschoben.

Weitere Einzelheiten der Erfindung ergeben sich aus den Unteransprüchen und den nachfolgenden Beschreibungen schematisch dargestellter Ausführungsformen.
- Figur 1:: Perspektivische Darstellung eines Dübels mit Metallfedereinlage;
- Figur 2:: Kolbenkörper zu Figur 1;
- Figur 3:: Perspektivische Darstellung eines Dübels mit metallischem Zylinderkörper;
- Figur 4:: Kolbenkörper zu Figur 3;
- Figur 5:: Schnitt durch eingesteckten Dübel mit einem Zylinderkörper, in dem eine Metallhülse sitzt;
- Figur 6:: wie Figur 5, jedoch mit verkürzten Kanälen und umgepumptem Klebstoff;
- Figur 7:: wie Figur 5, jedoch mit montiertem Dübel und Möbelbeschlag;
- Figur 8:: Schnitt zu Dübel aus Figur 3, jedoch im montierten Zustand;
- Figur 9:: Schnitt eines Dübels mit im Klebstoff angeordneter Aufschmelzhülse, vgl. Figur 1, jedoch eingesteckt in eine Leichtbauplatte;
- Figur 10:: wie Figur 9, jedoch mit eingeschobenem Kolbenkörper;
- Figur 11:: Schnitt eines Dübels mit im Klebstoff angeordneter Aufschmelzfeder, vgl. Figur 1, jedoch eingesteckt in eine Leichtbauplatte;
- Figur 12:: wie Figur 11, jedoch mit eingeschobenem Kolbenkörper;
- Figur 13:: Querschnitt des Kolbenkörpers aus Figur 5 in Höhe der Rastnocken;
- Figur 14:: Querschnitt des Kolbenkörpers aus Figur 9 unterhalb der Umlaufkerben;
- Figur 15:: Metallstumpf;
- Figur 16:: Schnitt durch eingesteckten Dübel mit zwei Kolbenkörpern;
- Figur 17:: wie Figur 16, jedoch mit eingeschobenem unteren Kolbenkörper;
- Figur 18:: wie Figur 17, jedoch mit zusätzlich eingeschobenem oberen Kolbenkörper.

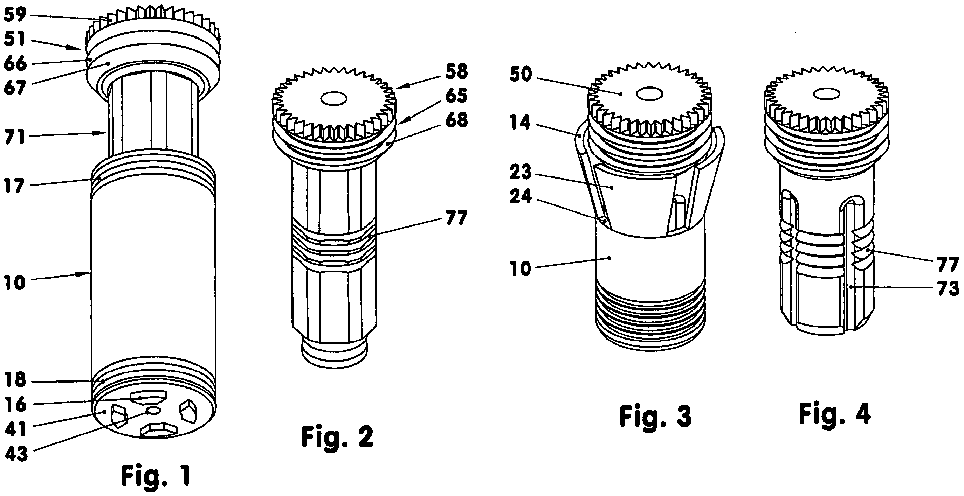

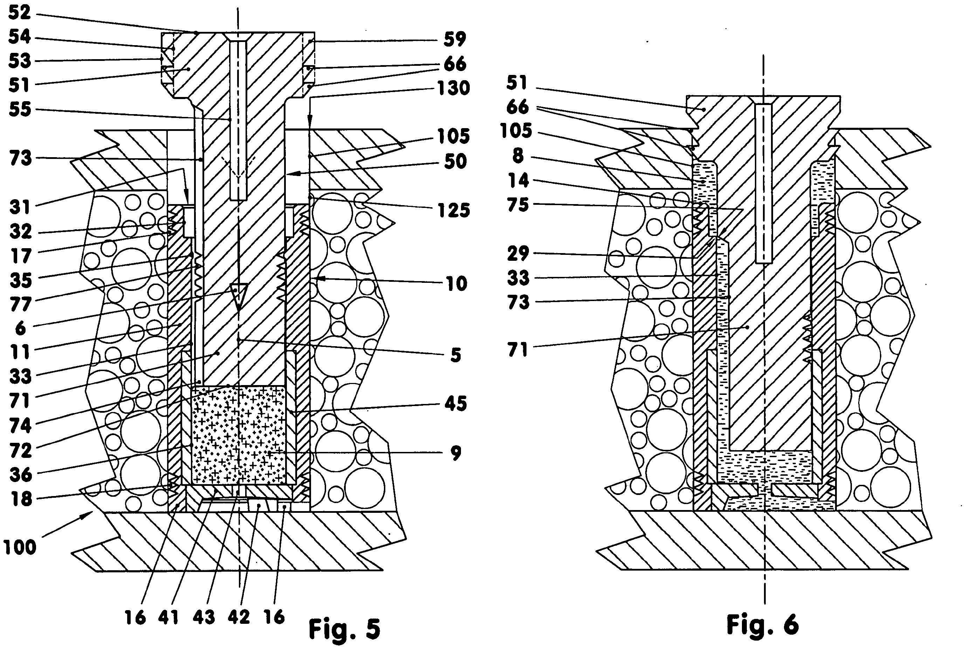

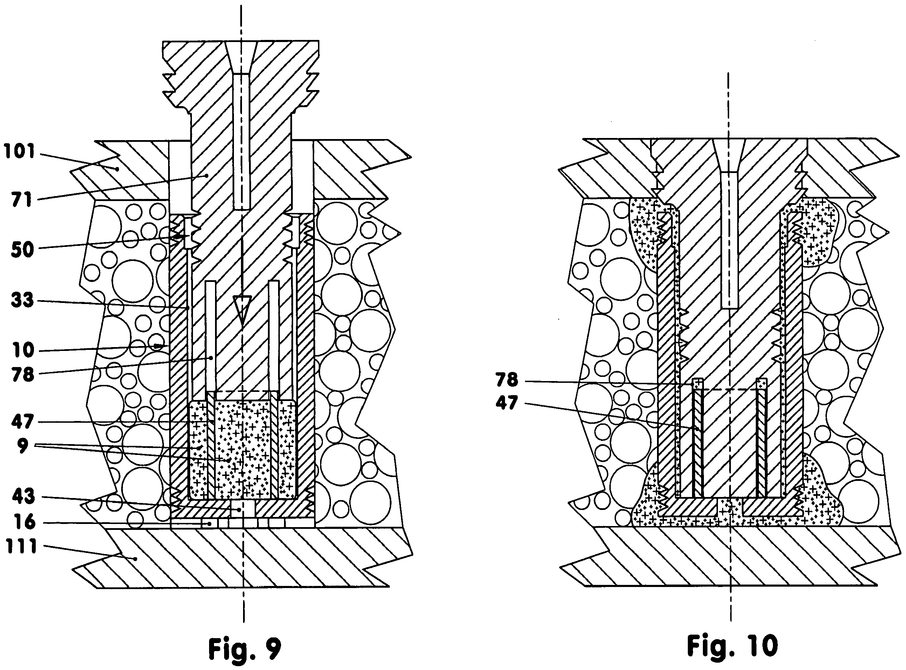

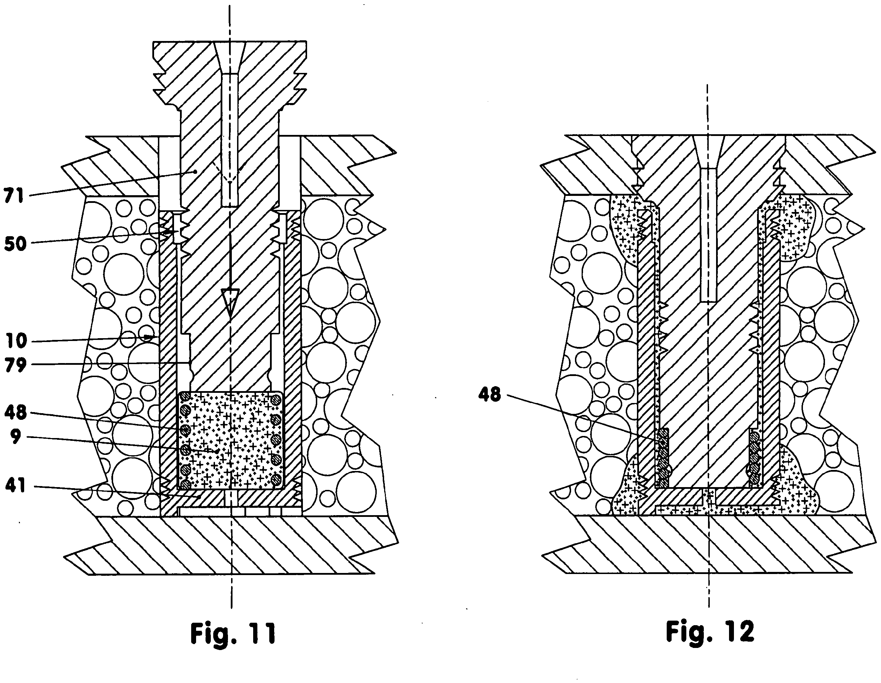

Die Figur 1 zeigt einen im Auslieferungszustand dargestellten Klebedübel. Im Zylinderkörper (10) des Klebedübels steckt ein teilweise in die Ausnehmung (31) des Zylinderkörpers (10) eingeschobener Kolbenkörper (50), vgl. Figur 9 und 11. Zwischen dem Kolbenkörper (50) und dem Zylinderkörper (10) ist ein formsteifer Klebstoff (8) eingeschlossen, vgl. Figur 5.

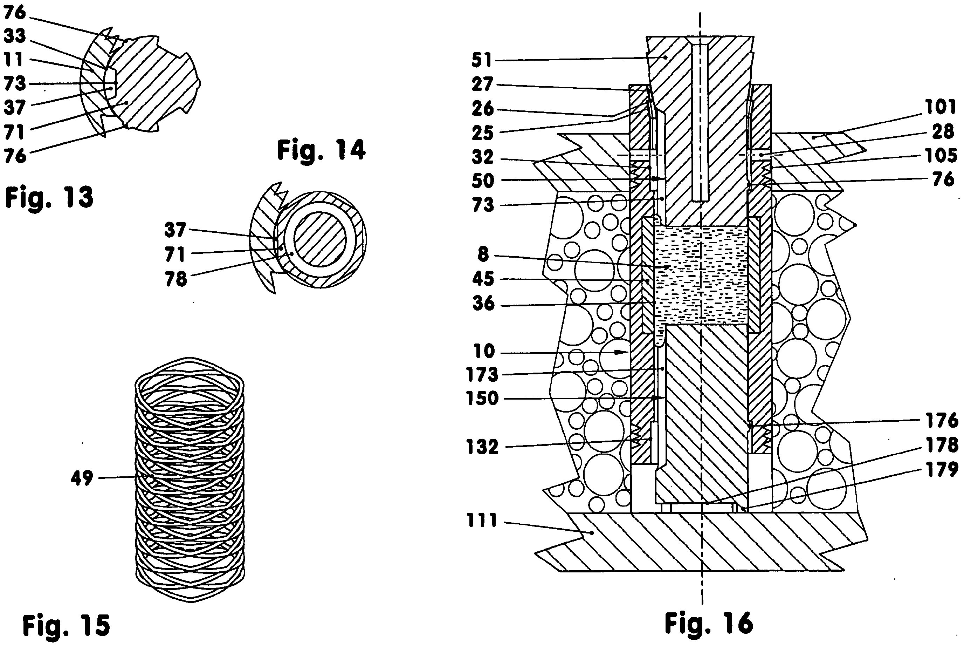

Figur 2 zeigt einen Kolbenkörper (50), dessen Kolbenabschnitt (51) einen sechseckigen Querschnitt hat, vgl. auch Figur 14.

Die Figur 3 stellt einen zusammengeschobenen Klebedübel ohne Klebstoff dar. Bei dieser Dübelvariante hat der Zylinderkörper (10) ausgestellte Hintergriffselemente (23). Daneben ist in Figur 4 der passende Kolbenkörper (50) dargestellt. Er hat einen zylindrischen Querschnitt, in den z.B. vier Kanäle (73) eingearbeitet sind.

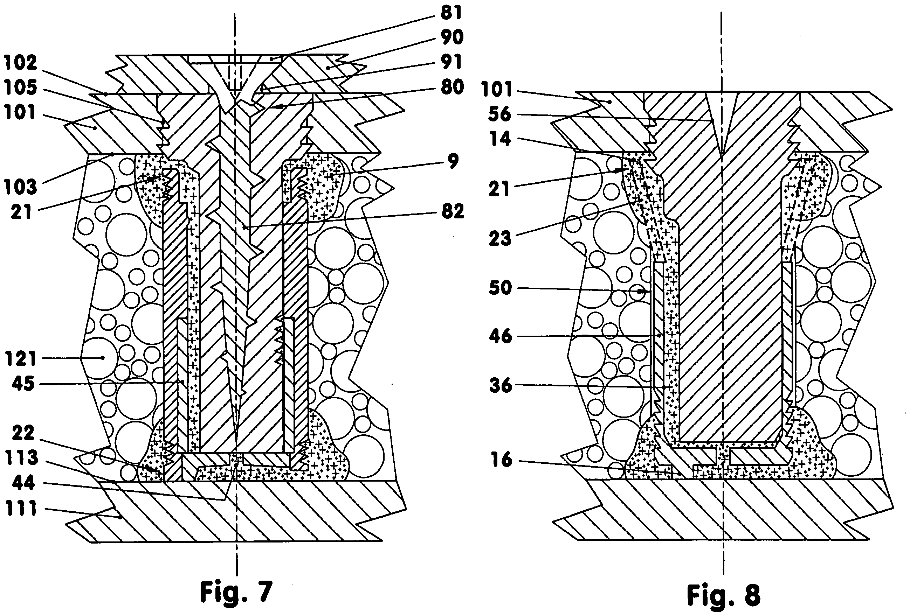

Die Figur 5 zeigt den Klebedübel im Längsschnitt. Sein Zylinderkörper (10) steckt dabei in einer Leichtbauplatte (100) ohne Riegel und feste Einlagen, vgl. auch Figur 7, an der mit Hilfe des Klebedübels z.B. ein Möbelbeschlag (90) befestigt werden soll.

Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innen liegenden Oberflächen (103, 113) mit dem plattenförmigen Stützkern (121) verklebt. Die dargestellte Leichtbauplatte hat eine Wandstärke von 20 bis 40 Millimetern. Jede Deckplatte ist z.B. 2 bis 8 Millimeter dick. Statt des Schaumkerns kann sie u.a. auch einen Wabenkern haben. In der Leichtbauplatte (100) befindet sich eine Bohrung (130), die sich aus den Abschnitten (105) und (125) zusammensetzt.

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Klebedübel montieren zu können, wird die erste Deckplatte (101) und der Stützkörper (121) auf- bzw. durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden. Die entstandene Ausnehmung, bzw. Bohrung (130), wird beispielsweise mit Pressluft freigeblasen oder leergesaugt.

Der Zylinderkörper (10) ist ein topfförmiges Bauteil, das aus einem Rohrabschnitt (11) und einem Boden (41) besteht. Im Ausführungsbeispiel ist der Boden (41) im Rohrabschnitt (11) verklemmt, verklebt oder verschweißt. Der Boden (41), sofern er aus Kunststoff gefertigt ist, kann jedoch auch am Rohrabschnitt (11) angeformt sein.

Der Rohrabschnitt (11) hat an seinem unteren Ende im Ausführungsbeispiel z.B. drei Füße (16), mit denen er auf der innen liegenden Oberfläche (113) der unteren Deckplatte (111) aufsteht. Die Außenwandung des Rohrabschnitts (11) ist z.B. weitgehend zylindrisch. Am oberen und unteren Ende ist die Außenwandung ggf. strukturiert. Nach den Figuren 5 bis 7 befinden sich dort jeweils drei umlaufende Kerben (17, 18). Die einzelnen Kerben (17, 18) haben in der Gruppe zueinander den jeweils gleichen Abstand. Sie haben z.B. eine Tiefe von 0,3 bis 0,8 Millimetern.

Die Innenwandung des hier aus Kunststoff gefertigten Rohrabschnittes (11) ist in drei zylindrische Bereiche, einen oberen Verteilbereich (32), einen mittigen Zylinderbereich (33) und einen unteren Verdrängungsbereich (36) aufgeteilt. Der Zylinderbereich (33) und der Verdrängungsbereich (36) haben hier jeweils den gleichen Durchmesser. Dieser ist um ca. einen Millimeter kleiner als der Innendurchmesser des Verteilbereichs (32). Im oberen Bereich des Zylinderbereichs (33) sind z.B. sechs auf dem Innenumfang in einer Ebene gelegene Rastnoppen (35), linsenförmige, nach innen ragende Erhöhungen, gleichmäßig verteilt angeordnet.

Im Verdrängungsbereich (36) ist als Aufschmelzkörper (45) eine metallische Zylinderhülse eingelegt. Die Zylinderhülse (45) wird beispielsweise unter einem elastischen Aufdehnen des unteren Zylinderbereichs (22) nachträglich in den Rohrabschnitt (11) eingesetzt. Ggf. wird die Zylinderhülse (45) beim Herstellen des Zylinderkörpers (10) umspritzt. Die Zylinderhülse (45) ist hier länger als die Höhe des mit Klebstoff (9) befüllten Raums. Dadurch können die unteren Kanalenden (74) zusätzlich aufgeheizt werden.

Alternativ kann die Ausnehmung (31) des Zylinderkörpers (10) auch mit einer durchgehenden zylindrischen Innenwandung ausgestattet werden, vgl. Figur 8. Dann wird in die Ausnehmung (31) die Zylinderhülse (45) von oben her eingesteckt. Die Zylinderhülse (45) kann auch mit einem angeformten Boden ausgestattet sein.

Die Zylinderhülse (45) ist, nach den Figuren 5 bis 6, ein aus einer Aluminiumlegierung hergestelltes Rohr. Die Aluminiumlegierung ist zumindest elektrisch leitfähig. Nur so ist gewährleistet, dass in der Zylinderhülse (45) die für ihre Erwärmung notwendigen induzierten Wirbelströme, verursacht durch ein äußeres hochfrequentes magnetisches Wechselfeld, entstehen können.

Die Zylinderhülse (45) kann auch aus einem ferromagnetischen Werkstoff wie z.B. Eisen, Nickel oder Cobalt hergestellt sein. Eine weitere ferromagnetische Alternative ist eine Heuslersche Legierung, z.B. Cu₂MnAL. Die ferromagnetischen Werkstoffe verstärken die Wirkung des Magnetfelds. Alle hier genannten Werkstoffe bzw. Legierungen können auch für die im Folgenden erwähnten Aufschmelzkörper (46-49) verwendet werden.

Der zum Verdrängungsbereich (36) hin ebene Boden (41) hat z.B. ebenfalls drei Füße (42), die sich an der innen liegenden Oberfläche (113) abstützen. Sie liegen in radialer Richtung vor den Füßen (16) des Rohrabschnitts (11). Der Boden (41), der ggf. anstelle von Kunststoff aus einem elektrisch leitfähigen und/oder ferromagnetischen Werkstoff gefertigt sein kann, hat hier z.B. eine zentrale Austrittsausnehmung (43).

Auf dem Boden (41) des Zylinderkörpers (10) sitzt, umgeben von dem Aufschmelzkörper (45), der Klebstoff (9) als ein starrer, zylindrischer Körper. Der Klebstoff (9) ist als aufschmelzbarer Einkomponentenkleber z.B. ein reaktiver Schmelzkleber auf Polyurethan-Basis, der für die chemische Vernetzung Feuchtigkeit benötigt. Er hat bei ca. 100° bis 120° Celsius eine Dichte von 3000 bis 60000 mPa·s. Der auf bis zu 170° Celsius erwärmte Klebstoff (8) arbeitet z.B. ohne Volumenzunahme.

Nach Figur 5 ist der Klebstoff (9) zumindest bereichsweise vom Aufschmelzkörper (45) umgeben. Zum Beispiel ist die obere und die untere Stirnfläche des Klebstoffs (9) nicht von einem elektrisch leitfähigen und/oder ferromagnetischen Werkstoff bedeckt. Die untere Stirnseite kann jedoch auch bedeckt sein, sofern der Boden (41) als Aufschmelzkörper benutzt wird.

Der Kolbenkörper (50) besteht aus einem Kolbenabschnitt (71) und einem Klemmabschnitt (51). Der Kolbenabschnitt (71) ist hier großteils zylindrisch gestaltet. Er hat einen Außendurchmesser, der dem Innendurchmesser des Zylinderbereichs (33) des Zylinderkörpers (10) entspricht. Im Bereich seiner unteren Stirnseite, der Kolbenbodenfläche (72), liegt er dicht am Zylinderbereich (33) an. An der Außenwandung des Kolbenabschnitts (71) befinden sich z.B. drei am Umfang äquidistant verteilte Kanäle (73), vgl. Querschnitt (37) in Figur 14, zur Führung des erweichten Klebstoffs (8). Der einzelne Kanal (73) ist z.B. ca. 0,5 mm tief und im Mittel 1,85 mm breit. Die z.B. parallel zur Mittellinie (5) verlaufenden Kanäle (73) enden unten an der Kolbenbodenfläche (72), während sie oben, zumindest in Figur 5, z.B. bis an den Klemmabschnitt (51) heranreichen.

Ggf. können die Kanäle (73) auch in die Wandung des Zylinderbereichs (33) eingearbeitet sein. Ebenso können die Kanäle auch als Bohrungen in den Bauteilen (10) oder (50) angeordnet sein.

Im mittleren Bereich befindet sich in der Außenwandung des Kolbenabschnitts (71) eine Struktur, die u.a. das Haften des Klebstoffs (9) am Kolbenabschnitt (71) verbessern soll. Hier sind es z.B. vier kerbenartige Querrillen (77), vgl. auch Figuren 2 und 4.

Der Klemmabschnitt (51), der beispielsweise als Hüllfläche (53) die Form eines Zylinders hat, ist in zwei Zonen unterschiedlicher Strukturen (58, 65) aufgeteilt. Als Hüllfläche (53) wird hier eine Mantelfläche bezeichnet, auf der speziell die Punkte der Strukturen (58, 65) liegen, die von der Mittellinie (5) einen jeweils gleichlangen, maximalen Abstand haben. Der Durchmesser dieser Hüllfläche (53) ist größer als der Innendurchmesser der Bohrung (130) der Leichtbauplatte (100), in die der Klebedübel eingesetzt wird.

Die erste Zone des Klemmabschnitts (51) hat als Struktur (58) eine Längsrillung. Diese Längsrillung (58) ist eine Art Kerbverzahnung mit geraden, z.B. spitz zulaufenden Zähnen (59). Im Ausführungsbeispiel beträgt die Zahnbreite ca. 1 Millimeter. Die Zahnfußbreite misst ca. 0,7 Millimeter. In den Figuren 1 bis 4 hat die Längsrillung (58) 36 Zähne. Die Profilwinkel der linken und rechten Zahnflanken sind gleich groß. Je nach Ausführungsform schwankt die Zähnezahl zwischen 15 und 50 Zähnen. Die Kerbverzahnung hat eine konstante Teilung.

Alternativ kann die Struktur (58) auch eine Aneinanderreihung von z.B. halbkugelförmigen Noppen sein.

Die zweite Zone des Klemmabschnitts (51) hat als Struktur (65) eine Querrillung. Die Querrillung (65) besteht z.B. aus zwei bis vier umlaufenden Stegen (66). Beispielsweise haben alle Stege (66) den gleichen Querschnitt und die gleiche Querschnittsform. Auch sind die Stege (66) jeweils gleich weit voneinander entfernt.

Jeder Steg (66) hat eine Gleit- (67) und eine Sperrflanke (68). Die Gleitflanke (67) hat die Gestalt eines geraden Kegelstumpfmantels, dessen gedachte Spitze auf der Mittellinie (5) - nach Figur 5 - unterhalb des Klemmabschnitts (51) liegt. Der Kegelwinkel des Kegelstumpfmantels beträgt hier 80 Winkelgrade.

An der Rückseite der Gleitflanke (67) schließt sich die z.B. ebene Sperrflanke (68) an. Die Normale der Ebene der Sperrflanke (68) verläuft parallel zur Mittellinie (5). Die gemeinsame Schnittkante von Gleitflanke (67) und Sperrflanke (68) liegt auf der Hüllfläche (53).

Der letzte Steg (66), also der, der sich direkt an die Längsrillung (58) anschließt, geht direkt in diese über. Die Sperrflanke (68) dieses Steges (66) existiert nur in den Zahnlücken der Längsrillung (58).

Im Ausführungsbeispiel ist der Durchmesser der Hüllfläche (53) um 0,5 Millimeter größer als der Innendurchmesser der Bohrung (105), vgl. Figur 5. Wird der Kolbenabschnitt (71) in die Bohrung (130) eingeschoben und der Klemmabschnitt (51) in die Bohrung (105) eingepresst, so verkrallen sich die Stege (66) in den unteren Schichten der Deckplatte (101), während sich die Zähne der Längsrillung (58) in der, in der Regel härteren, Oberflächenschicht der Deckplatte (101) einkerben, vgl. Figur 7. Der Kernzylinder (54), er beschreibt eine Fläche, auf der diejenigen Punkte der Strukturen (58, 65) liegen, deren Abstand zur Mittellinie (5) des Klebedübels minimal sind, hat hier einen kleineren Durchmesser als die Bohrung (105). Trotzdem reicht das hier erzielte Einkerben als Verdrehsicherung.

Die obere Stirnfläche (52) des Klemmabschnitts (51) liegt im Ausführungsbeispiel, vgl. Figur 7, in der Ebene der außen liegenden Deckplattenoberfläche (102). In der Praxis liegt die Stirnfläche (52) meist ein bis zwei Zehntel Millimeter unterhalb der oben genannten Ebene.

Der Klemmabschnitt (51) hat hier als zentrale Ausnehmung (55) eine zylindrische Bohrung, die am Übergang zur z.B. planen Stirnfläche (52) eine 45°-Fase, z.B. 0,5 x 45°, aufweist. Die Bohrung (55), in die später ein Befestigungsmittel (80), vgl. Figur 7, eingeschraubt wird, hat z.B. einen Durchmesser von 1,3 Millimetern. Die zentrale Ausnehmung (55, 56) hat in der Regel einen mittlerer Durchmesser, der mindestens um 30% kleiner ist als der Kern- oder Minimaldurchmesser des darin zu befestigenden Befestigungsmittels (80).

Im Ausführungsbeispiel dient sie u.a. der Führung des Befestigungsmittels (80), z.B. einer Spanplattenschraube, damit letztere beim Einschrauben nicht von der Mittellinie (5) wegwandert. Die Bohrung (55) ist in der Regel kürzer als das einzuschraubende oder einzuschlagende Befestigungsmittel (80), zumindest ist sie in den gezeigten Ausführungsbeispielen keine Durchgangsbohrung.

Selbstverständlich kann die Ausnehmung (55) auch nahezu jeden anderen Querschnitt haben, z.B. einen ovalen, einen polygonalen, einen vieleckigen, einen sternförmigen oder dergleichen. Auch kann die Ausnehmung nur die Form eines kurzen, geraden Kegels (56) haben, vgl. Figur 9. In diesem Fall muss sich das Befestigungsmittel (80) den größten Teil der haltenden Bohrung selbst erzeugen.

Auch kann die Ausnehmung (55, 56) weggelassen werden oder nur durch einen Markierungspunkt ersetzt werden.

Zum Befestigen eines Möbelbeschlags (90) werden die erforderlichen Klebedübel, nachdem sie maschinell ein hochfrequentes magnetisches Wechselfeld passiert haben, in die Bohrungen (130) der Leichtbauplatte (100) in der Regel in einem Hub eingedrückt, der entsprechende Möbelbeschlag (90) positioniert und mittels Schrauben (80) im Klebedübel befestigt.

Im hochfrequenten magnetischen Wechselfeld, die Frequenz liegt z.B. zwischen 5 und 30 kHz, werden in den verschiedenen Aufschmelzkörpern Wirbelströme erzeugt, die diese aufheizen. Die erhitzten Aufschmelzkörper (45-49) schmelzen den festen, im Verdrängungsbereich (36) angeordneten, Klebstoff.

Danach wird im Einzelnen zunächst der Klebedübel in die Bohrung (130) so eingesetzt, dass der Zylinderkörper (10) auf der innen liegenden Oberfläche (113) aufliegt. Die obere Stirnfläche (14) des Zylinderkörpers (10) liegt hierbei z.B. 0,5 mm unterhalb der innen liegenden Oberfläche (103) der oberen Deckplatte (101). Mit der ersten Relativbewegung des Kolbenkörpers (50) gegenüber dem Zylinderkörper (10) rasten die Rastnoppen (35) aus der oberen Querrille (77) heraus. Beim weiteren Eindrücken des Kolbenkörpers (50) entsteht im Zylinderbereich (33) ein Überdruck, durch den zum einen der verflüssigte Klebstoff (8) über die Ausnehmung (43) nach unten ausfließt und zum anderen über die Kanäle (73) nach oben gepresst wird. Dies geschieht zwangsläufig, da der freie Querschnitt (44) der Austrittsausnehmung (43) wesentlich kleiner ist als die Summe der Querschnitte (37) der Kanäle (73), vgl. Figur 14. Die Austrittsausnehmung (43) wirkt hydraulisch als Drossel, vgl. Figur 6.

Der nach oben verdrängte Klebstoff (8) sammelt sich im Verteilbereich (32) und in der Bohrung (105). Der nun in die Bohrung (105) geschobene Klemmabschnitt (51) verpresst den im Bereich der Bohrung (105) vorhandenen Klebstoff (8) unterhalb der Oberfläche (103). In den darauf folgenden Minuten härtet der Klebstoff (8) aus, vgl. Figur 7.

Schon während des Abbindens des Klebstoffs (8, 9) kann der Möbelbeschlag (90) über den Klebedübel positioniert werden, um dann, z.B. mittels Spanplattenschrauben (80), in den jeweiligen Ausnehmungen (55) oder (56) fixiert zu werden. Ggf. dehnt die einzelne Spanplattenschraube (80) den Klebedübel zusätzlich auf, so dass sich der Klemmabschnitt (51) noch weiter in der Bohrung (105) verkrallt. Hierbei kann sogar ein mechanischer Umgriff an der innen liegenden Oberfläche (103) der Deckplatte (101) entstehen.

Nach der Figur 6 hat der Kolbenkörper (50) beispielsweise gegenüber dem Kolbenkörper aus Figur 5 kürzere Kanäle (73). Das obere Ende (75) der Kanäle (73) ist hier so gewählt, dass die Kanalenden (75) die obere Steuerkante (29) des Zylinderbereichs (33) gerade passieren, wenn zumindest ein Teil der Stege (66) des Klemmabschnitts (51) sich schon dichtend in der Bohrung (105) befinden. Die obere Steuerkante (29) wirkt wie die Steuerkante eines hydraulischen Ventils. Der Spalt zwischen ihr und der zylindrischen Wandung des Kolbenabschnitts (71) verhindert ein Zurückströmen des noch flüssigen Klebstoffs (8). Die zwischen dem Klemmabschnitt (51) und der Bohrung (105) eingeschlossene Klebstoffmenge kann nur im oberen Dübelbereich verpresst werden. Durch die Länge der Kanäle (73) kann so zusätzlich die oben zu verpressende Klebstoffmenge gezielt gesteuert werden.

Die Figur 8 zeigt einen - nur dreiteiligen - montierten Klebedübel in einer Leichtbauplatte (100). Hier ist der Zylinderkörper (10) zugleich ein z.B. aus einer Aluminiumlegierung gefertigter Aufschmelzkörper (46). Der topfförmige Zylinderkörper (10), dessen Außenfläche ggf. mit einem bis 150°C temperaturfesten Lack beschichtet ist, weist im oberen Endbereich (21) nach außen abstehende angeformte Hintergriffselemente (23) auf, die durch schmale Längsschlitze (24) voneinander getrennt sind. Die z.B. vier Längsschlitze (24) liegen jeweils paarweise in einer Ebene, wobei beide Ebenen sich auf der Mittellinie (5) schneiden. Die Außenflächen der Hintergriffselemente (23) sind z.B. Flächenabschnitte eines Kegelstumpfmantels, dessen Kegelwinkel ca. 30 Winkelgrade beträgt. Die Hintergriffselemente (23) haben an ihren Oberkanten einen Außendurchmesser, der ein bis drei Millimeter größer ist als der Innendurchmesser der Bohrung (105).

Im Ausführungsbeispiel berühren die Hintergriffselemente (23) bei gesetztem Klebedübel die obere Deckplatte (101) nicht. Der beim Setzen des Klebedübels verdrängte Klebstoff (8) wird durch die aufgespreizten Hintergriffselemente nach oben zur Deckplatte (101) geführt und dort verteilt. Ein Teil des Klebstoffs (8) fließt über die Längsschlitze (24) in den Bereich des Stützkerns. Ein anderer Teil umströmt die Hintergriffselemente (23) an deren oberen Kanten unterhalb der Deckplatte (101).

Hier berührt die untere Stirnseite des Kolbenkörpers (50) nicht den Boden des Zylinderkörpers (10). In der Folge kann nach einem regulären Eindrücken des Kolbenkörpers (50) der Klebstoff (8) nicht vollständig aus dem Verdrängungsbereich (36) verdrängt werden. Die verbleibende Klebstoffrestmenge fehlt zwar dann vor den Deckplatten (101, 111), dafür ist der Klebedübel aber für unterschiedliche Leichtbauplattenstärken verwendbar.

In den Figuren 9 und 10 wird ein Klebedübel gezeigt, dessen Aufschmelzkörper (47) eine sog. Innenhülse ist. Diese Innenhülse (47) steckt zumindest bereichsweise im zylindrischen Klebstoffkörper (9). Dabei ist zum einen die Innenhülse (47) großteils mit Klebstoff (9) ausgefüllt und zum anderen radial außen mit einem Ring aus Klebstoff (9) umgeben. Aus der oberen Stirnseite des Klebstoffkörpers ragt die Innenhülse (47) z.B. 0,3 bis 2 Millimeter heraus. Die untere Stirnseite des Klebstoffkörpers (9) schließt bündig mit der unteren Stirnseite der Innenhülse (47) ab. Beim Aufschmelzen des Klebstoffs (9) gibt die Innenhülse (47) aufgrund ihrer Anordnung im Klebstoff (9) sehr effektiv ihre Wärme an diesen ab. Der Zylinderkörper (10) heizt sich nur geringfügig auf.

Der Kolbenkörper (50) hat bei dieser Ausführungsform im Kolbenabschnitt (71) zumindest annähernd einen sechseckigen Querschnitt, vgl. Figuren 1, 2 und 14. Hier werden die Ausströmquerschnitte (37) durch die planen Wandungsabschnitte der Außenwandung des Kolbenabschnitts (71) und die zylindrische Wandung des Zylinderbereichs (33) gebildet.

In den Kolbenkörper (71) ist von der unteren Stirnseite aus ein zentrischer Ringkanal (78) eingearbeitet. In ihm findet die Innenhülse (47) bei montiertem Klebedübel Platz, vgl. Figur 10.

Durch die Innenhülse (47) ist der Klebstoff (8, 9) in zwei Teilmengen aufgeteilt. Die in der Innenhülse (47) angeordnete Teilmenge wird beim Einschieben des Kolbenkörpers (50) in den Zylinderkörper (10) vor der unteren Deckplatte (111) über die Bohrung (43) verteilt. Die um die Innenhülse (47) platzierte Teilmenge wird beim Einschieben des Kolbenkörpers nach oben verdrängt und so an die obere Deckplatte (101) gefördert. Mit der Wahl des mittleren Durchmessers der Innenhülse (47) wird die Klebstoffmengenverteilung innerhalb der Bohrung (130) festgelegt. Im Ausführungsbeispiel beträgt die Teilmenge, die durch die Bohrung (43) gepresst wird, ca. 33% des gesamten Klebstoffvolumens. Weitere 33% werden - bei voller Kolbenhubausnutzung - über die Querschnitte (37) nach oben zur oberen Deckplatte (101) gefördert. Die restlichen 34% verkleben den Zylinderkörper (10) mit dem Kolbenkörper (50).

Nach den Figuren 10 und 14 hat die Summe der Querschnitte (37) die gleiche Fläche wie der Austrittsquerschnitt (44) der Ausnehmung (43). Dies ermöglicht ein sehr schnelles Einschieben des Kolbenkörpers (50).

Die Figuren 11 und 12 zeigen ebenfalls einen Klebstoffkörper (9) mit einem integrierten Aufschmelzkörper (48). Letzterer ist hier eine nahezu vollständig vom Klebstoff (9) umgebene Schraubendruckfeder. Sie sitzt relativ weit außen im Klebstoffkörper (9). Nach dem Aufschmelzen des Klebstoffs (9) wird beim Einschieben des Kolbenkörpers (50) in den Zylinderkörper (10) die Schraubendruckfeder (48) fast vollständig oder ganz zusammengeschoben. Dazu weist der Kolbenabschnitt (71) einen Verdrängerabschnitt (79) auf, dessen Außendurchmesser kleiner ist als der Innendurchmesser der Schraubendruckfeder (48). Die Länge des Verdrängerabschnitts (79) entspricht der Blocklänge der Schraubendruckfeder (48).

Der Aufschmelzkörper (48) kann auch eine Zugfeder sein, die sich während des Aufschmelzens selbsttätig auf die Blocklänge zusammenzieht.

Anstelle des Aufschmelzkörpers (48) kann auch ein zusammenschiebbarer Drahtgewebeschlauch (49) verwendet werden, vgl. Figur 15.

Selbstverständlich ist es auch möglich, im Klebstoff (9) eine größere Menge Metallkügelchen oder vergleichbare Körper wie z.B. Plättchen, Lochscheiben oder Ringe zu integrieren, die dann beim Aufschmelzen auf den Boden (41) absinken.

Die Figuren 16 bis 18 zeigen einen Klebedübel mit zwei gegenläufig bewegbaren Kolbenkörpern (50, 150). Der Zylinderkörper (10) des Klebedübels hat einen von den bisherigen Varianten abweichenden Aufbau. Er hat eine Länge, die der Summe aus der Zwischenlagendicke und der Wandstärke der oberen Deckplatte (101) entspricht. Ggf. kann diese Länge auch geringfügig kleiner sein als die Summe.

In die Innenwandung des oberen Zylinderkörperbereichs ist mindestens eine Rastkerbe (25) eingearbeitet, deren obere Kerbflanke (26) z.B. eine Ebene bildet. Zusätzlich ist die Innenwandung in dem Bereich, in dem bei montiertem Dübel der Klemmabschnitt (51) sitzt, vgl. Figur 6, mit einer Vielzahl von Längsrillen (27) profiliert. Um den Klemmabschnitt (51) nach der Montage verdrehsicher im Zylinderkörper (10) zu fixieren, hat die Außenwandung des Klemmabschnitts (51) eine vergleichbare Profilierung, die in die Längsrillen (27) rutschsicher eingreift.

Oberhalb der drei Umlaufkerben (17) weist der Zylinderkörper (10) mehrere, auf dem Umfang verteilte, Querbohrungen (28) oder Ausnehmungen mit einem nicht kreisförmigen Querschnitt auf, über die der noch flüssige Klebstoff (8) beim Einschieben des Kolbenkörpers (50) in den Zylinderkörper (10) unter der oberen Deckplatte (101) verteilt wird.

Im Zylinderkörper (10) sind der Verdrängungsbereich (36) und der Aufschmelzkörper (45) in die Mitte verlegt und der Boden (41) fehlt. Zudem verfügt der untere Innenbereich über einen zweiten Verteilbereich (132). Die Außenwandung des Zylinderkörpers (10) weist im oberen Bereich beispielsweise keine Strukturen auf.

Der obere Kolbenkörper (50) ist weitgehend eine Kurzversion des in Figur 5 gezeigten Kolbenkörpers. Der untere, umgekehrt eingebaute Kolbenkörper (150) hat keinen Klemmabschnitt. Ggf. ist er durch eine entsprechende Profilierung verdrehsicher im Zylinderkörper (10) längsgeführt. Beide Kolbenkörper (50, 150) stehen über Rastnoppen (76, 176) am Zylinderkörper (10) in den Verteilbereichen (32, 132) an.

Für die Montage wird der Klebedübel mit dem aufgeheizten Klebstoff (9)zunächst in die Bohrung (130) eingesetzt. Der untere Kolbenkörper (150) liegt auf der unteren Deckplatte (111) auf. Damit auch der Klebstoff (8) zwischen den unteren Kolbenkörper (150) und die Deckplatte (111) fließen kann, weist die untere Stirnfläche (178) des Kolbenkörpers (150) z.B. drei Füße (179) auf.

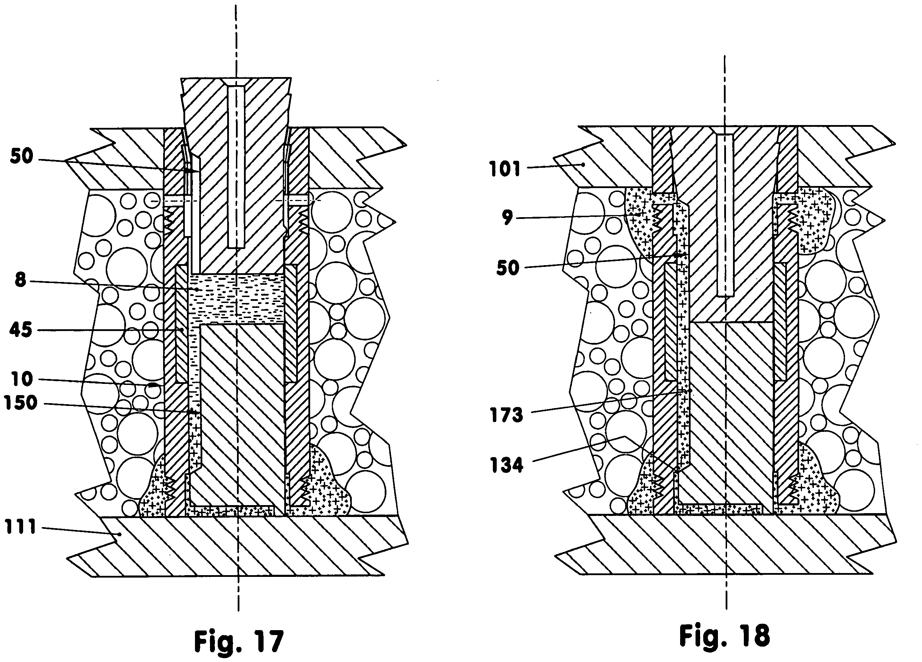

Um den noch flüssigen Klebstoff (8) zu verteilen, wird der Zylinderkörper (10) und der obere Kolbenkörper (50) gemeinsam nach unten in Richtung auf die untere Deckplatte (111) geschoben. Der Zylinderkörper (10) schiebt sich über den unteren Kolbenkörper (150). Durch die Druckerhöhung strömt der Klebstoff (8) zur Deckplatte (111), vgl. Figur 17. Sobald der Zylinderkörper (10) an der unteren Deckplatte (111) anschlägt, verschließt eine untere Steuerkante (134) die unteren Kanäle (173).

Nun wird der obere Kolbenkörper (50) nach unten geschoben. Nach dem Verdrängerprinzip fließt der Klebstoff (8) in den Bereich der oberen Deckplatte (101), vgl. Figur 18. Der obere Kolbenkörper (50) verrastet im Zylinderkörper (10). Einige Zeit später hat der Klebstoff (9) abgebunden.

Bei allen gezeigten Klebedübeln besteht die Möglichkeit, den Zylinderkörper (10) zu verlängern und in eine in die untere Deckplatte (111) gebohrte Sacklochbohrung hineinragen zu lassen, vgl. DE 10 2006 049 954 A1.

Als unbetätigter Klebedübel wird ein Dübel bezeichnet, wie er in den Handel gelangt, d.h. der Verdrängungsbereich (36) ist mit festem, ggf. auch granulat- oder pulverförmigem Klebstoff (8) befüllt und der Kolbenkörper (50) steht um seinen Einschiebehub aus dem Zylinderkörper (10) heraus.

Ist der im Zylinderkörper (10) eingefüllte Klebstoff (9) ein fester Zylinder oder Quader, so kann dieser Festkörper zwischen den Zylinderkörper (10) und den Kolbenkörper (50) eingeklebt werden.

Die Figuren 5, 9 und 11 zeigen in den Ausnehmungen (130) sitzende Klebedübel. Dabei sind die Klebstoffe (9) als die starren Klebstoffkörper (9) dargestellt, wie sie beim Konfektionieren in den Zylinderkörper (10) eingelegt werden. In den oben genannten Figuren sind die Klebstoffe (9) schon geschmolzen, da sie außerhalb der Leichtbauplatte (100) dem hochfrequenten magnetischen Wechselfeld ausgesetzt wurden. Es ist aber auch denkbar, die Klebedübel erst in die Ausnehmungen (130) zu setzen und danach erst die Aufschmelzkörper (45-49) von außen her über das Wechselfeld aufzuheizen.

### Bezugszeichenliste:

- 5: Mittellinie des Klebedübels
- 6: Dübelsetzrichtung
- 8: Klebstoff, flüssig
- 9: Klebstoff, fest, Klebstoffkörper
- 10: Zylinderkörper
- 11: Rohrabschnitt
- 14: Stirnfläche, oben
- 16: Füße
- 17: Kerben, umlaufend, oben, Umlaufkerben
- 18: Kerben, umlaufend, unten, Umlaufkerben
- 21: Endbereich, oben
- 22: Endbereich, unten
- 23: Hintergriffselemente
- 24: Längsschlitze
- 25: Rastkerbe
- 26: Kerbflanke, eben
- 27: Längsrillen
- 28: Querbohrungen, radial
- 29: Steuerkante, oben
- 31: Ausnehmung, Stufenbohrung
- 32: Verteilbereich
- 33: Zylinderbereich
- 35: Rastnoppen
- 36: Verdrängungsbereich
- 37: Austrittsquerschnitt
- 41: Boden, Zylinderboden
- 42: Füße
- 43: Austrittsausnehmung
- 44: Querschnitt zu (43)
- 45: Aufschmelzkörper; Zylinderhülse, rohrförmig
- 46: Aufschmelzkörper; Zylinderkörper
- 47: Aufschmelzkörper; Innenhülse, rohrförmig; Aufschmelzhülse
- 48: Aufschmelzkörper; Schraubendruckfeder, Aufschmlezfeder
- 49: Aufschmelzkörper; Drahtgewebeschlauch
- 50: Kolbenkörper
- 51: Klemmabschnitt
- 52: Stirnfläche
- 53: Hüllfläche
- 54: Kernzylinder
- 55: Ausnehmung, zylindrisch, zentral
- 56: Ausnehmung, kegelförmig
- 58: Längsrillung, Kerbverzahnung, Struktur
- 59: Zähne
- 65: Querrillung, Struktur
- 66: Stege
- 67: Gleitflanken
- 68: Sperrflanken
- 71: Kolbenabschnitt
- 72: Kolbenbodenfläche
- 73: Kanäle, Längsnuten
- 74: Kanalenden, unten
- 75: Kanalenden, oben
- 76: Rastnoppen
- 77: Querrillen
- 78: Ringkanal, stirnseitig
- 79: Verdrängerabschnitt
- 80: Befestigungsmittel, Spanplattenschraube
- 81: Schraubenkopf, Kopf
- 82: Schaft
- 90: Möbelbeschlag
- 91: Bohrung
- 100: Sandwichplatte, Leichtkern-Verbundplatte; flächiges Bauteil in Stützkernbauweise
- 101: Deckplatte, oben
- 102: außen liegende Oberfläche
- 103: innen liegende Oberfläche
- 105: Bohrung
- 111: Deckplatte, unten
- 113: innen liegende Oberfläche
- 121: Stützkern, Wabenkern, Schaumstoffkern
- 125: Bohrung
- 130: Gesamtbohrung, Ausnehmung
- 132: Verteilbereich
- 134: Steuerkante, oben
- 150: Kolbenkörper, unten
- 173: Kanäle, Längsnuten
- 176: Rastnoppen
- 178: Stirnfläche
- 179: Füße

## Patentansprüche

1. Klebedübel zur Verwendung in Leichtbauplatten (100) aus mindestens einem Zylinderkörper (10) und mindestens einem Kolbenkörper (50, 150),
- wobei der einzelne Zylinderkörper (10) zusammen mit mindestens einem Kolbenkörper (50, 150) einen Verdrängungsbereich (36) umschließt und
- wobei der einzelne Zylinderkörper (10) und/oder der einzelne Kolbenkörper (50, 150) mindestens eine Austrittsausnehmung (37, 44) aufweist,
**dadurch gekennzeichnet,**
- **dass** der Verdrängungsbereich (36) mit einem thermisch schmelzbaren Klebstoff (9) befüllt ist und
- **dass** mindestens ein elektrisch leitfähiger und/oder ein ferromagnetischer Aufschmelzkörper (45-49) den Klebstoff (9) zumindest bereichsweise umgibt oder vom Klebstoff (9) zumindest bereichsweise umgeben wird.

2. Klebedübel gemäß Anspruch 1, **dadurch gekennzeichnet, dass** der schmelzbare Klebstoff (9) ein einteiliger zylindrischer Körper ist.

3. Klebedübel gemäß Anspruch 1, **dadurch gekennzeichnet, dass** der Aufschmelzkörper (45, 47) eine metallische Zylinderhülse ist.

4. Klebedübel gemäß Anspruch 1, **dadurch gekennzeichnet, dass** der Aufschmelzkörper (45) der Zylinderkörper (10) ist.

5. Klebedübel gemäß Anspruch 1, **dadurch gekennzeichnet, dass** mindestens ein Kolbenkörper (50, 150) mindestens einen Kanal (73, 173) aufweist, der - in Kolbenbewegungsrichtung gesehen - an der Kolbenbodenfläche (72) beginnt und bei zusammengeschobenem Klebedübel im jeweils hinteren Endbereich (21, 22) des Zylinderkörpers (10) endet.

6. Klebedübel gemäß Anspruch 1, **dadurch gekennzeichnet, dass** der Kolbenkörper (50) zur Aufnahme eines Befestigungsmittels (80) dient.

7. Klebedübel gemäß Anspruch 1, **dadurch gekennzeichnet, dass** der Kolbenkörper (50, 150) eine zentrale Ausnehmung (55, 56) zur Aufnahme eines Befestigungsmittels (80) aufweist.

8. Verfahren zum Setzen und Fixieren eines Klebedübels in einer Leichtbauplatte (100), wobei der Klebedübel aus mindestens einem Zylinderkörper (10), mindestens einem Kolbenkörper (50, 150) und einem vom Zylinderkörper (10) und dem Kolbenkörper (50, 150) umgebenen Klebstoff (9) besteht,
**dadurch gekennzeichnet,**
- **dass** der Klebedübel, in dem mindestens ein elektrisch leitfähiger und/oder ein ferromagnetischer Aufschmelzkörper (45-49) den Klebstoff (9) zumindest bereichsweise umgibt oder vom Klebstoff (9) zumindest bereichsweise umgeben wird, zum Aufschmelzen des Klebstoffs (9) unmittelbar vor dem Setzvorgang durch ein hochfrequentes magnetisches Wechselfeld bewegt wird,
- **dass** beim Einstecken in eine den Klebedübel aufnehmende Leichtbauplattenausnehmung (130) der Zylinderkörper (10) und der Kolbenkörper (50) unter einem Verdrängen des nun fließfähigen Klebstoffs (8) zusammengeschoben werden, wobei der aus dem Klebedübel verdrängte aushärtende Klebstoff (8) den Zylinderkörper (10) und den Kolbenkörper (50, 150) mit der Leichtbauplatte (100) verklebt.

## Claims

1. A chemical (adhesive) anchor stud for use in light-weight building boards (100), comprising at least one cylinder body (10) and at least one piston body (50, 150), wherein
- the single cylinder body (10) and the at least one piston body (50, 150) jointly surround a displacement region (36) and
- the single cylinder body (10) and/or the single piston body (50, 150) have at least one outlet opening (37, 44) therethrough, **characterized in that**
- displacement region (36) is filled with a thermally meltable adhesive composition (9) and
- adhesive composition (9) surrounds, or is surrounded by, at least one electrically conductive and/or ferromagnetic melt-initiating body (45 - 49).

2. Chemical (adhesive) anchor stud as claimed in claim 1, **characterized in that** meltable adhesive composition (9) comprises a one-piece cylindrical body.

3. Chemical (adhesive) anchor stud as claimed in claim 1, **characterized in that** melt-initiating body (45, 47) is a cylindrical metal sleeve.

4. Chemical (adhesive) anchor stud as claimed in claim 1, **characterized in that** the melt-initiating body (45) comprises said cylinder body (10).

5. Chemical (adhesive) anchor stud as claimed in claim 1, characterized that at least one piston body (50, 150) has therein at least one channel (73, 173) which begins short of piston bottom (72), seen in the direction of piston movement, and ends in the rear end region (21, 22) of cylinder body (10) in the pushed-together condition of the anchor stud.

6. Chemical (adhesive) anchor stud as claimed in claim 1, **characterized in that** piston body (50) serves to receive a fastening means (80).

7. Chemical (adhesive) anchor stud as claimed in claim 1, **characterized in that** piston body (50, 150) has a central opening (55, 56) therethrough for the reception of a fastening means (80).

8. A method of setting and fastening a chemical (adhesive) anchor stud in place in a light-weight building panel, said chemical (adhesive) anchor stud consisting of at least one cylinder body (10), at least one piston body (50, 150) and an adhesive composition (9) surrounded by cylinder body (10) and piston body (50, 150), **characterized in that**:
- said chemical (adhesive) anchor stud, which has therein at least one electrically conductive and/or ferromagnetic melt-initiating body (45 - 49) surrounding, or being surrounded by, meltable adhesive composition (9) at least in portions of said body, has movement imparted thereto by a high-frequency magnetic alternating field directly before the setting procedure;
- and **in that**, as the anchor stud is inserted into an opening (130) receiving it in a light-weight building panel, cylinder body (10) and piston body (50) are pushed together while the now flowable adhesive composition (8) is being displaced, with the adhesive composition displaced from said anchor stud setting and bonding piston body (50, 150) to light-weight building panel (100).

## Revendications

1. Cheville adhésive destinée à être utilisée dans des plaques de construction légère (100), composée au moins d'un corps de cylindre (10) et au moins d'un corps de piston (50, 150),
- chaque corps de cylindre (10) avec au moins un corps de piston (50, 150) entourant une zone de refoulement (36) et
- chaque corps de cylindre (10) et/ou chaque corps de piston (50, 150) présentant au moins un orifice de sortie (37, 44),
**caractérisée en ce**
- **que** la zone de refoulement (36) est remplie d'une substance adhésive thermofusible (9) et
- **qu'**au moins un corps fusible électroconducteur et/ou un corps fusible ferromagnétique (45 - 49) entoure la substance adhésive (9) au moins par endroits ou est entouré de la substance adhésive(9) au moins par endroits.

2. Cheville adhésive selon la revendication 1, **caractérisée en ce que** la substance adhésive fusible (9) est un corps cylindrique composé d'une seule partie.

3. Cheville adhésive selon la revendication 1, **caractérisée en ce que** le corps fusible (45, 47) est une douille cylindrique en métal.

4. Cheville adhésive selon la revendication 1, **caractérisée en ce que** le corps fusible (45) est le corps de cylindre (10).

5. Cheville adhésive selon la revendication 1, **caractérisée en ce qu'**au moins un corps de piston (50, 150) présente au moins un canal (73, 173) qui, dans la direction de mouvement du piston, commence à la surface du fond de piston (72) et qui, lorsque la cheville adhésive est comprimée, se termine dans la zone d'extrémité arrière (21, 22) du corps de cylindre (10).

6. Cheville adhésive selon la revendication 1, **caractérisée en ce que** le corps de piston (50) sert à recevoir un moyen de fixation (80).

7. Cheville adhésive selon la revendication 1, **caractérisée en ce que** le corps de piston (50, 150) présente une cavité centrale (55, 56) destiné à recevoir un moyen de fixation (80).

8. Procédé de pose et de fixation d'une cheville adhésive dans une plaque de construction légère (100), la cheville adhésive étant composée d'au moins un corps de cylindre (10), d'au moins un corps de piston (50) et d'au moins une substance adhésive entourée du corps de cylindre (10) et du corps de piston (50, 150),
**caractérisé en ce**
- **que** la cheville adhésive dans laquelle au moins un corps fusible électroconducteur et/ou un corps fusible ferromagnétique (45 - 49) entoure la substance adhésive (9) au moins par endroits ou est entouré de la substance adhésive (9) au moins par endroits, est déplacée par un champ magnétique alternatif à haute fréquence immédiatement avant la pose pour la fusion de la substance adhésive (9),
- **que** le corps de cylindre (10) et le corps de piston (50),lors de la pose de la cheville dans un évidement dans la plaque de construction légère (130), sont pressés l'un contre l'autre et ce faisant repoussent la substance adhésive coulante (8), la substance adhésive thermodurcissable (8) repoussée de la cheville adhésive assemblant le corps de cylindre (10) et le corps de piston (50, 150) avec la plaque de construction légère (100) par collage.
